# EUROPEAN PATENT SPECIFICATION

(11) **EP 3 684 587 B1**
(45) Date of publication and mention of the grant of the patent: **04.08.2021**
(21) Application number: 18765868.7
(22) Date of filing: 06.09.2018
(51) Int. Cl.: B29C 53/16, B29C 65/18, A43B 3/16

(54) **APPARATUS AND METHOD FOR EMBEDDING AN ELASTIC CORD**
VORRICHTUNG UND VERFAHREN ZUM EINKAPSELN EINER ELASTISCHEN SCHNUR
DISPOSITIF ET MÉTHODE POUR ENCAPSULER UN CORDON ÉLASTIQUE

(30) Priority: 19.09.2017 GB 201715066
(43) Date of publication of application: 29.07.2020
(73) Proprietor: Burgate Manufacturing Ltd, East Yorkshire YO43 4SG (GB)
(72) Inventor: SMITH, Daren, Hull HU2 8EP (GB)
(74) Representative: Bates, Daniel Joseph
(86) International application number: PCT/EP2018/073955
(87) International publication number: WO 2019/057501

(56) References cited:
- US-A- 3 139 365
- US-A- 3 828 367
- US-A- 4 616 429
- US-A1- 2010 046 860

## Description

### Technical Field

The invention relates to an apparatus and method for manufacture of a plastic film having an elastic cord at an edge thereof.

### Background

Disposable personal protection products such as oversleeves, overshoes, hair nets etc are used in many industries such as the food processing and preparation industry. Typically such products are worn by a user to protect the user and to improve hygiene. Furthermore, disposably bin liners are widely used at work and in the home. Such disposably products are required to be sufficiently strong so that they are reliable, whilst also being of an affordable price so that the cost of providing the required protection and hygiene, or robustness is not too high. Many other business sectors also require covers or sheets to protect products or items.

It is known to provide an apparatus for making a plastic film having an elastic cord at an edge of the film. The apparatus may be used for the high volume manufacture of the plastic film, which is subsequently made into products such as disposable oversleeves, overshoes, hair nets etc. Typically the plastic film is a thermoplastic such as polyethylene, which is provided on a feed reel, and the apparatus folds and bonds each edge of the film back on itself to create a duct at each edge of the film. The apparatus also operates to tread a tensioned elastic cord within the duct. In the case of oversleeves the elastic cord is secured to the plastic film by periodically welding tabs onto the edge of the plastic film to mechanically trap the elastic cord within the duct. Each tab is typically of a non-woven thermoplastic fabric that is crimped and welded by heating onto the edge of the plastic film.

It is also known to provide a similar apparatus for making a plastic film having an inelastic cord at an edge of the film, which is subsequently made into products such as disposable bin liners etc. Typically the apparatus folds and bonds each edge of the film back on itself to create a duct at each edge of the film for the inelastic cord. The inelastic cord is secured to the plastic film by periodically welding the edge of the plastic film to mechanically trap the inelastic cord within the duct. The inelastic cord is used to tie the bin liner closed when a bin is being emptied.

A problem with the manufacture of the known plastic film with an elastic cord at an edge thereof is that an additional tab is required to secure the elastic cord to the plastic film. Such a tab represents an additional part, which may increase cost. Furthermore, the requirement to weld the tab onto the edge of the plastic film represents an additional manufacturing step, which may also increase costs. Such cost may be highly significant in the case of disposable products, where a small additional cost may make the product less viable from a commercial perspective. A further problem is that the tab represents an additional part that may become detached from the plastic film, which may present a hygiene or "foreign body" hazard in certain environments such as a food processing factory. In addition, if the tab does become detached the elastic cord may be exposed which may present a further hygiene hazard.

A further problem with the known plastic film is that the elastic cord is free to move within the ducts at each edge of the plastic film. Accordingly, the elastic cord is only attached to the plastic film with the separate tabs which are periodically welded in place. Such an arrangement may provide a plastic film that is less robust and of a lower quality. Such a reduced quality may be highly significant in the case of disposable products, where a small quality improvement may also make the product less viable from a commercial perspective.

A further problem with the known plastic film is that when a product or cover such as an oversleeve is made using the film the adjacent sheets of the plastic film can unintentionally stick or mechanically lock together along the full length thereof. Such a problem is due to the method of manufacture of the plastic film and the use of the welded tabs. This may be a particular problem when the plastic film is used to manufacture overlseeves because the openings thereof may be difficult to prise apart so that the oversleeves can be used.

A problem with the plastic film having an inelastic cord at an edge thereof is that the bin liners made therefrom are awkward to secure to an opening of the bin. It is known to use a separate elastic band around the opening of the bin to secure the bin liner in place, but such an arrangement is awkward and time consuming. The use of a separate elastic band may also be unhygienic. A further problem is that such bin liners typically have a large overhang of plastic material to secure the bin liner around an opening of the bin (e.g. by tying the bin liner around an opening of the bin) so that the bin liner does not fall into the bin with the weight of rubbish put in it. Such a large overhang is a waste of plastic material, which represents an additional cost and an environmental problem. An apparatus and a method according to the background art are disclosed in US 4 616 429 A.

It is broadly an object of the present invention to address one or more of the above mentioned disadvantages of the known apparatus and methods for manufacture of such plastic film.

### Summary

What is required is a way of reducing or minimising at least some of the above-mentioned problems.

According to a first aspect of the invention, there is provided an apparatus for embedding a continuous elastic cord along an edge of a continuous plastic sheet, comprising an adhesive applicator device operable to apply an adhesive along the edge of the plastic sheet, a folder device operable to provide a folded edge of the plastic sheet so that the adhesive is within the folded edge, and a feed device having a tension device operable to feed the elastic cord in tension into the folded edge so that the elastic cord is in contact with the adhesive of the edge, wherein a bonding device is operable to activate the adhesive of the folded edge to bond the elastic cord in tension to the adhesive within the folded edge and to bond the folded edge to the plastic sheet, and wherein the adhesive applicator device is arranged to apply the adhesive prior to the folding device arranged to fold the edge of the plastic sheet.

Such an apparatus provides the advantage that the elastic cord is bonded securely to the plastic sheet using the adhesive. Accordingly the elastic cord is not free to move within the edge of the plastic sheet, and the resulting products made from such a plastic sheet may be more robust and of a higher quality. It will be understood that the apparatus folds and bonds the edge of the sheet back on itself to trap the tensioned elastic cord and to bond the elastic cord within the folded edge. The apparatus avoids the need for additional tabs to trap the elastic cord, which avoids the cost of the tabs and the additional manufacturing step of welding the tabs. Such a cost may be highly significant in the case of disposable products, where a small reduction in cost may make the product more viable from a commercial perspective. Avoiding the need for the tabs also avoids the potential hygiene and safety hazards should the tab become detached from the plastic sheet. Furthermore, when the plastic sheet is made into products comprising two adjacent plastic sheets they are less prone to stick or mechanically lock together at unwanted locations due to the manner of manufacture. The apparatus may be used for the high volume manufacture of the plastic sheet, which is subsequently made into products such as disposable oversleeves, overshoes, hair nets, bin liners etc or other covers for large or small equipment, products, or machinery etc.

The Applicant has also realised that the plastic sheet produced using the apparatus may be used to manufacture bin liners which have an elastic cord embedded around an opening thereof. Such a bin liner can be readily secured to a bin by folding the opening of the bin liner around the opening of the bin without the need for a separate elastic band to secure the bin liner to the bin. Such a bin liner with an elastic cord embedded around an opening thereof is more convenient to use and may be more hygienic. Furthermore, such a bin liner may require less plastic sheet material because the use of the material around an opening of the bin liner is more efficient when compared to the prior art. A bin liner according to the invention does not require such a large overhang for securing the bin liner to the bin, which provides additional cost and environmental advantages. Furthermore, the use of a separate elastic band to secure the bin liner to the bin is not required.

In one embodiment the apparatus is operable to embed another continuous elastic cord at an opposing edge of the continuous plastic sheet, comprising another adhesive applicator device operable to apply the adhesive to the opposing edge of the plastic sheet, the folder device operable to provide an opposing folded edge of the plastic sheet so that the adhesive is within the opposing folded edge, and another feed device having a respective tension device operable to feed the other elastic cord in tension into the opposing folded edge so that said other elastic cord is in contact with the adhesive of the opposing edge, wherein another bonding device is operable to activate the adhesive of the opposing folded edge to bond the other elastic cord in tension to the adhesive within the opposing folded edge and to bond the opposing folded edge to the plastic sheet. Such an arrangement may be used to manufacture different types of product using the sheet.

Preferably the one or more adhesive applicator devices comprise a respective spray device operable to spray the adhesive along one or both edges of the plastic sheet, or a pressurised nozzle device to apply a bead or continuous strip of the adhesive along one or both edges of the plastic sheet. Preferably the one or more spray device or pressurised nozzle device comprises an electronically operated solenoid valve. Such an arrangement may provide an improved control of the application of the adhesive, and may provide an improved start-up of the apparatus when the plastic sheet is accelerated from being stationary.

Preferably the adhesive is applied along one or both edges of the plastic sheet with a width in the range 0.5 to 2.0cm. Such a width is sufficient to provide a bed of adhesive on which the elastic cord is bonded.

Preferably the folder device comprises a first roller, a second roller and a third roller, the plastic sheet being provided in tension between the first and third rollers, the second roller being between the first and third rollers and operable deflect the plastic sheet away from a plane between the first and third rollers such that the second roller is operable to turn one or both edges of the plastic sheet around a respective end of the second roller, and wherein the one or both folded edges of the plastic sheet are provided at the third roller. Such an arrangement provides a ready way to turn the edges of the plastic sheet.

The third roller may have one or more grooves around a circumference thereof to guide a respective elastic cord of one or both folded edges as the plastic sheet passes around the third roller.

Preferably each feed device comprise a respective pulley wheel such that a respective elastic cord passes around a part-circumference of its associated pulley wheel, an edge of the respective pulley wheel being within an associated folded edge to provide said feed of the respective elastic cord into the associated folded edge. Preferably each pulley wheel is conical. Preferably the edge of the respective pulley wheel is within its associated folded edge at a position between the second and third rollers. Such an arrangement provides a ready way to feed the elastic cord into a respective folded edge so that it is in the required position within the folded edge.

Preferably the one or more elastic cords are provided from a respective supply reel, and the one or more tension devices comprises a respective adjustable brake of a respective supply reel to set the tension of the one or more elastic cords. Such an adjustable brake provides a convenient arrangement for setting the tension of the elastic cords.

Preferably the one or more bonding devices comprise at least one heated roller to heat the adhesive and to provide said activation thereof. Preferably the adhesive is a hot-melt adhesive. Preferably the one or more bonding devices have an actuator to apply pressure to one or both folded edges. Such an arrangement provides a ready way to activate the adhesive and to consolidate each folded edge having the tensioned elastic cord.

Preferably the plastic sheet is a thermoplastic. Such a plastic sheet may also provide an improved bond of the tensioned elastic cord when use with a hot-melt adhesive.

Preferably each elastic cord is a single strand. Such a single strand may be balanced so that it does not twist when unwound from a supply reel.

Preferably the apparatus further includes a folding device to fold the plastic sheet so that the elastic cords of respective edges are adjacent to one another. It will be understood that the folding device may operate to fold the plastic sheet in half along its length, which may be advantageous for making certain products such as overshoes, hair nets or bin liners.

Preferably the apparatus is operable to provide two continuous plastic sheets, each sheet having at least one elastic cord at a respective edge thereof, the apparatus being operable to position the two plastic sheets are so that they are face to face with one another and so that respective elastic cords of each sheet are adjacent to one another. Such an arrangement may be advantageous for making certain products such as oversleeves, overshoes, hair nets or bin liners etc, or other covers for large or small equipment, products, or machinery etc.

Preferably the apparatus further includes a welding device to periodically weld the one or more plastic sheets together across a width thereof, said welds being spaced apart along a length of the one or more plastic sheets. Such an arrangement may be advantageous for making certain products such as oversleeves, overshoes, hair nets or bin liners etc, or other covers for large or small equipment, products, or machinery etc.

Preferably the welding device is operable to continuously weld the two plastic sheets along a length thereof in order to weld the respective edges of the two plastic sheets together. Such an arrangement may be advantageous for making certain products such as overshoes, hair nets or bin liners.

Preferably the apparatus further includes a cutting device operable to cut the elastic cords at each weld of the one or more plastic sheets, and to perforate the one or more plastic sheets along each weld across the width thereof. Such an arrangement allows the products such as oversleeves, overshoes, hair nets or bin liners etc, or other covers for large or small equipment, products, or machinery etc, to be torn off the continuous sheet as required.

According to a second aspect of the invention there is provided a method of operating an apparatus according to the first aspect of the invention, the method including operating the apparatus to embed a continuous elastic cord along one or more edges of the continuous plastic sheet.

Such a method provides the advantage that the elastic cord is bonded securely to the plastic sheet using the adhesive. Accordingly the elastic cord is not free to move within the edge of the plastic sheet, and the resulting products made from such a plastic sheet may be more robust and of a higher quality. The apparatus may be used for the high volume manufacture of the plastic sheet, which is subsequently made into products such as disposable oversleeves, overshoes, hair nets, bin liners etc, or other covers for large or small equipment, products, or machinery etc.

Preferably the method includes operating the apparatus to fold the plastic sheet using the folding device so that the elastic cords of respective edges are adjacent to one another. It will be understood that the folding device may operate to fold the plastic sheet in half along its length, which may be advantageous for making certain products such as overshoes, hair nets or bin liners.

Preferably the method includes operating the apparatus to provide two continuous plastic sheets such that each sheet has at least one elastic cord at a respective edge thereof, the method including operating the apparatus so that the two plastic sheets are positioned face to face with one another and so that respective elastic cords of each sheet are adjacent to one another. Such an arrangement may be advantageous for making certain products such as oversleeves, overshoes, hair nets or bin liners etc, or other covers for large or small equipment, products, or machinery etc.

Preferably the method includes operating the apparatus to periodically weld the one or more plastic sheets together across a width thereof, said welds being spaced apart along a length of the one or more plastic sheets. Such an arrangement may be advantageous for making certain products such as oversleeves, overshoes, hair nets or bin liners etc, or other covers for large or small equipment, products, or machinery etc.

Preferably the method includes operating the apparatus to continuously weld the two plastic sheets along a length thereof using the welding device in order to weld the respective edges of the two plastic sheets together. Such an arrangement may be advantageous for making certain products such as overshoes, hair nets or bin liners.

Preferably the method includes operating the apparatus to cut the elastic cords at each weld of the one or more plastic sheets using the cutting device, and to perforate the one or more plastic sheets along each weld across a width thereof using the cutting device. Such an arrangement allows the products such as oversleeves, overshoes, hair nets or bin liners etc, or other covers for large or small equipment, products, or machinery etc, to be torn off the continuous sheet as required.

In one embodiment the method further includes manufacturing bag products comprising overshoes, hair nets or bin liners using the one or more plastic sheets. In another embodiment the method further includes manufacturing tube products comprising oversleeves or other covers using the one or more plastic sheets.

According to a third aspect of the invention there is provided a method of embedding a continuous elastic cord along an edge of a continuous plastic sheet, comprising:
applying an adhesive along the edge of the plastic sheet;
folding the edge of the plastic sheet so that the adhesive is within a folded edge;
feeding the elastic cord in tension into the folded edge so that the elastic cord is in contact with the adhesive of the edge; and
activating the adhesive of the folded edge to bond the elastic cord in tension to the adhesive within the folded edge and to bond the folded edge to the plastic sheet, wherein said applying the adhesive is performed prior to said folding the edge of the plastic sheet.

Such a method provides the advantage that the elastic cord is bonded securely to the plastic sheet using the adhesive. Accordingly the elastic cord is not free to move within the edge of the plastic sheet, and the resulting products made from such a plastic sheet may be more robust and of a higher quality. It will be understood that the method folds and bonds the edge of the sheet back on itself to trap the tensioned elastic cord and to bond the elastic cord within the folded edge. The method avoids the need for additional tabs to trap the elastic cord, which avoids the cost of the tabs and the additional manufacturing step of welding the tabs. Such a cost may be highly significant in the case of disposable products, where a small reduction in cost may make the product more viable from a commercial perspective. Avoiding the need for the tabs also avoids the potential hygiene and safety hazards should the tab become detached from the plastic sheet. Furthermore, when the plastic sheet is made into products comprising two adjacent plastic sheets they are less prone to stick or mechanically lock together at unwanted locations due to the manner of manufacture. The method may be used for the high volume manufacture of the plastic sheet, which is subsequently made into products such as disposable oversleeves, overshoes, hair nets etc, or other covers for large or small equipment, products, or machinery etc.

The Applicant has also realised that the plastic sheet produced using the method may be used to manufacture bin liners which have an elastic cord embedded around an opening thereof. Such a bin liner can be readily secured to a bin by folding the opening of the bin liner around the opening of the bin without the need for a separate elastic band to secure the bin liner to the bin. Such a bin liner with an elastic cord embedded around an opening thereof is more convenient to use and may be more hygienic. Furthermore, such a bin liner may require less of the plastic sheet material because the use of the plastic sheet material around an opening of the bin liner is more efficient when compared to the prior art. A bin liner according to the invention does not require such a large overhang for securing the bin liner to the bin, which provides additional cost and environmental advantages. Furthermore, the use of a separate elastic band to secure the bin liner to the bin is not required.

In one embodiment the method further includes embedding another continuous elastic cord at an opposing edge of the continuous plastic sheet, comprising:
applying the adhesive to the opposing edge of the plastic sheet;
folding an opposing edge of the plastic sheet so that the adhesive is within the opposing folded edge;
feeding the other elastic cord in tension into the opposing folded edge so that said other elastic cord is in contact with the adhesive of the opposing edge; and
activating the adhesive of the opposing folded edge to bond the other elastic cord in tension to the adhesive within the opposing folded edge and to bond the opposing folded edge to the plastic sheet.

Such an arrangement having the elastic cord embedded along both edges of the plastic sheet may be used to manufacture different types of product using the sheet.

Preferably the method further includes spraying the adhesive along one or both edges of the plastic sheet, or applying a bead or continuous strip of the adhesive along one or both edges of the plastic sheet. Such an arrangement may provide an improved control of the application of the adhesive, and may provide an improved start-up when the plastic sheet is accelerated from being stationary.

Preferably the method further includes applying the adhesive along one or both edges of the plastic sheet with a width in the range 0.5 to 2.0cm. Such a width is sufficient to provide a bed of adhesive on which the elastic cord is bonded.

Preferably said folding the one or both edges of the plastic sheet comprises providing the plastic sheet in tension between two locations and deflecting the plastic sheet away from a plane between said locations using a roller in order to turn one or both edges of the plastic sheet around a respective end of the roller. Such an arrangement provides a ready way to turn the edges of the plastic sheet.

Preferably said feeding comprises using a respective pulley wheel to introduce a respective elastic cord into an associated folded edge. Such an arrangement provides a ready way to feed the elastic cord into a respective folded edge so that it is in the required position within the folded edge.

Preferably said feeding comprises setting the tension of the one or more elastic cords. Such an adjustable brake provides a convenient arrangement for setting the tension of the elastic cords.

Preferably the method further includes using a hot-melt adhesive. Preferably the method further includes heating the adhesive to provide said activation thereof. Preferably the method further includes applying pressure to one or both folded edges. Such an arrangement provides a ready way to activate the adhesive and to consolidate each folded edge having the tensioned elastic cord.

Preferably the method further includes using a thermoplastic for the plastic sheet. Such a plastic sheet may also provide an improved bond of the tensioned elastic cord when use with a hot-melt adhesive.

Preferably the method further includes using a single strand for each elastic cord. Such a single strand may be balanced so that it does not twist when unwound from a supply reel.

Preferably the method further includes folding the plastic sheet so that the elastic cords of respective edges are adjacent to one another. It will be understood that such folding may fold the plastic sheet in half along its length, which may be advantageous for making certain products such as overshoes, hair nets or bin liners.

Preferably the method further includes providing two continuous plastic sheets, each sheet having at least one elastic cord at a respective edge thereof, the method including position the two plastic sheets so that they are face to face with one another and so that respective elastic cords of each sheet are adjacent to one another. Such an arrangement may be advantageous for making certain products such as oversleeves, overshoes, hair nets or bin liners etc, or other covers for large or small equipment, products, or machinery etc.

Preferably the method further includes periodically welding the one or more plastic sheet together across a width thereof, said welds being spaced apart along a length of the one or more plastic sheets. Such an arrangement may be advantageous for making certain products such as oversleeves, overshoes, hair nets or bin liners etc, or other covers for large or small equipment, products, or machinery etc.

Preferably the method further includes continuously welding the two plastic sheets along a length thereof in order to weld the respective edges of the two plastic sheets together. Such an arrangement may be advantageous for making certain products such as overshoes, hair nets or bin liners.

Preferably the method further includes cutting the elastic cords at each weld of the one or more plastic sheets, and perforating the one or more plastic sheets along each weld across the width thereof. Such an arrangement allows the products such as oversleeves, overshoes, hair nets or bin liners etc to be torn off the continuous sheet as required.

In one embodiment the method further includes manufacturing bag products comprising overshoes, hair nets, bin liners, steering wheel covers, seat covers, vehicle covers, or fire alarm covers, or other protection covers using the one or more plastic sheets. Such covers may be used for large or small equipment, products, or machinery etc. In another embodiment the method further includes manufacturing tube products comprising oversleeves or other covers using the one or more plastic sheets.

According to a fourth aspect, not within the scope of the invention as claimed, there is provided a bag or tube product or cover manufactured using the apparatus of the first aspect of the invention, or using the method of the second or third aspects of the invention.

According to an alternative characterisation of the invention there is provided an apparatus for embedding a continuous elastic cord along one or both edges of a continuous plastic sheet, comprising an adhesive applicator device to apply an adhesive along one or both edges of the plastic sheet, a folder device to fold one or both edges of the plastic sheet so that the adhesive is within one or both folded edges, one or two feed devices with a tension device to feed a respective elastic cord in tension into one or both folded edges so that the elastic cord is in contact with the adhesive, and a bonding device to activate the adhesive to bond the one or both elastic cords in tension to the adhesive within the one or both folded edges and to bond the one or both folded edges to the plastic sheet.

According to another characterisation of the invention there is provided a method of embedding a continuous elastic cord along one or both edges of a continuous plastic sheet, comprising:
applying an adhesive along one or both edges of the plastic sheet;
folding one or both edges of the plastic sheet so that the adhesive is within one or both folded edges;
feeding the elastic cord in tension into one or both folded edges so that the elastic cord is in contact with the adhesive of each edge; and
activating the adhesive of one or both folded edges to bond the elastic cord in tension to the adhesive within one or both folded edges and to bond one or both folded edges to the plastic sheet.

Any preferred or optional features of one aspect or characterisation of the invention may be a preferred or optional feature of other aspects or characterisations of the invention.

### Brief Description of the Drawings

Other features of the invention will be apparent from the following description of preferred embodiments shown by way of example only with reference to the accompanying drawings, in which;
**Figure 1** shows a schematic side view of an apparatus for embedding an elastic cord at edges of a plastic film according to an embodiment of the invention;
**Figure 2** shows a perspective view of a part of the apparatus shown in Figure 1;
**Figure 3** is a schematic side view of the stages of manufacture of the plastic film with the embedded elastic cord using the apparatus of Figures 1 and 2;
**Figure 4** shows a schematic side view of an apparatus for manufacturing tube or bag plastic film products according to an embodiment of the invention;
**Figure 5** shows a schematic side view of an apparatus for manufacturing bag plastic film products according to an embodiment of the invention;
**Figure 6** shows steps of a method according to an embodiment of the invention; and
**Figure 7** is a schematic side view of the stages of manufacture of the plastic film with the embedded elastic cord using the apparatus of Figures 1 and 2 according to another embodiment.

### Detailed Description

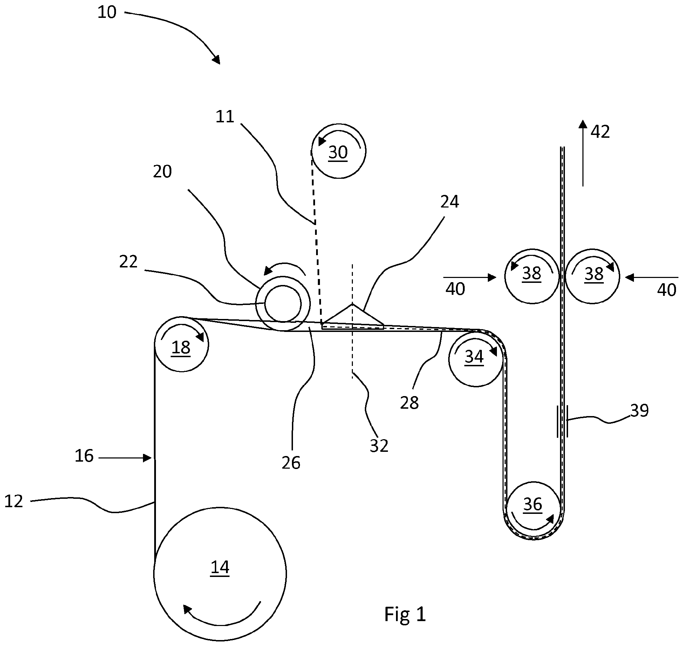

Figure 1 shows a schematic side view of an apparatus 10 for embedding an elastic cord 11 at edges of a plastic film 12 according to an embodiment of the invention. The plastic film 12 is a thermoplastic film such as polyethylene which is provided on a supply reel 14. The plastic film 12 may be alternatively termed a web or a continuous sheet or film, and has a thickness in the region of 0.2mm. The plastic film 12 may also be a non-woven thermoplastic fabric, which may be a spun-bonded polypropylene fabric. The elastic cord 11 may be alternatively termed a continuous elastic cord 11, and is substantially circular in section having a diameter of about 0.5mm in the unstretched condition. In Figure 1 the plastic film 12 is shown with a solid line, and the elastic cord 11 is shown with a dashed line. It will be understood from the following description that the elastic cord 11 is embedded at both edges or adjacent to the edges of the plastic film, and that the apparatus 10 is for the high-volume manufacturing of the plastic film 12 with the elastic cord 11 embedded at the edges of the film as a continuous process. However, in order to simplify the drawings the elastic cord 11 is described in detail for embedding at one edge only. The skilled person will know the requirements for duplication of the various parts of the apparatus 10 so that the elastic cord 11 is embedded at the other edge of the plastic film 12 at the same time.

An adhesive is applied to an edge of the plastic film 12, or adjacent to the edge of the plastic film 12, as shown at 16 using an adhesive applicator device (not shown). In one embodiment the adhesive is applied using a wheel (not shown) which is in contact with a bath of adhesive. In another embodiment the adhesive is sprayed onto the plastic film 12. The adhesive may be a hot-melt adhesive such that it cools shortly after being applied to the plastic film 12 at 16. A suitable hot-melt adhesive isavailable under the trade name BAMCare 511.

Other ways of applying the adhesive are also envisaged such as a double sided sticky tape, which may comprise a hot-melt adhesive. The adhesive is applied to an outer surface of the edge of the plastic film 12 such that the plastic film 12 can pass round a guide roller 18 without sticking to it. The guide roller 18 may be a driven roller to assist with passage of the plastic film 12 through the apparatus 10. A surface of the guide roller 18 may be rubber to assist with gripping the plastic film 12 to drive it through the apparatus 10.

A spray nozzle (not shown) with an electronically operated solenoid valve (not shown) may be used to spray the adhesive onto the plastic film 12 as shown at 16. In such an arrangement the spray nozzle is provided in communication with a pressurised reservoir (not shown) of the adhesive, for example a heated bath of hot-melt adhesive. The solenoid valve is then operated so that the adhesive is sprayed onto the edge of the plastic film 12. Using such a spray nozzle and solenoid valve may provide the advantage of an improved accuracy for applying the adhesive. Furthermore, such an arrangement may provide an improved start-up of the apparatus 10 when the plastic sheet 12 is accelerated from 0 m/s to 50 m/s or faster.

The next stage of the apparatus 10 comprises a feed roller 20 having a rebated end 22, followed by a conical pulley 24. The feed roller 20 and the conical pulley 24 operate to fold the edge of the plastic film 12 back on itself and to embed the elastic cord 11 within the folded edge. The feed roller 20 folds the edge of the plastic film to about 90 degrees as shown at 26, which is produced by the rebated end 22 of the feed roller 20 and due to the plastic film 12 being in tension. The plastic film 12 is then folded to 180 degrees as shown at 28 so that the plastic film 12 is folded back on itself. The conical pulley 24 is between the points 26, 28. The edge of the plastic film 12 is folded back on itself so that the overlap of the edge is about 1cm. The overlap is sufficient to allow the cord 11 to be embedded within the edge of the plastic film 12 and may be in the range 0.5 to 1.5cm. Whereas the edge of the plastic film 12 is described as being folded back on itself it will be understood that in effect the edge of the plastic film 12 is rotated back on itself.

In Figure 1 the conical pulley 24 is shown to be provided with a supply of elastic cord 11 from a supply reel 30. The conical pulley 24 is a free running wheel that is not driven, and that rotates about a vertical axis 32. The plastic film 12 with the embedded cord 11 then passes round a drive roller 34, which may have a rubber surface. As such the elastic cord 11 is pulled from the supply reel 30 by the drive roller 34. The supply roller 30 is braked, i.e. slowed, relative to the plastic film 12 such that the elastic cord 11 running therefrom is stretched (i.e. tensioned). In such a manner the elastic cord 11 is embedded in the plastic film 12 in a stretched condition (i.e. a tensioned condition). The supply roller 30 may be slowed relative to the speed of the plastic film 12 using an adjustable brake (not shown), so that the tension of the elastic cord 11 can be adjusted. The supply roller 30 with the adjustable brake may be termed a tension device. Such an arrangement allows the tension of the elastic cord 11 to be adjusted, i.e. set so that it is at a constant tension, and after encapsulation in the edge of the plastic film 12 varying amounts of pleating or crumpling of the plastic film 11 can be achieved according the tension of the elastic cord 11.

It will also be noted from the drawings that the feed roller 20 is arranged to deflect the plastic film 12 away from a natural straight line or plane between the guide roller 18 and the drive roller 34. Such an arrangement promotes folding of the edge of the plastic film 12 to about 90 degrees as shown at 26 and then to 180 degrees as shown at 28.

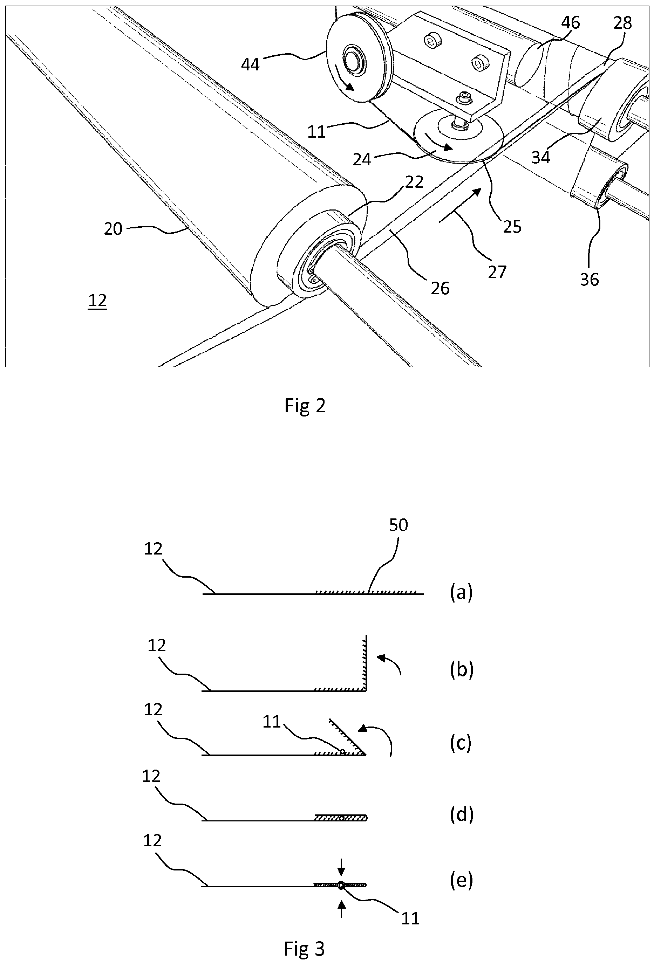

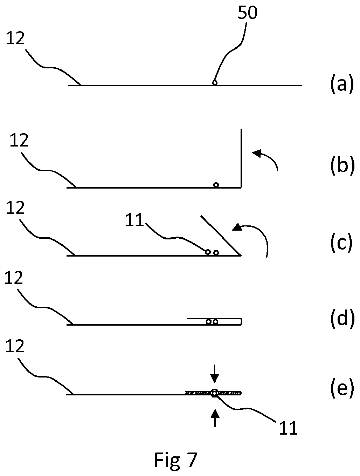

As the plastic film 12 passes around the drive roller 34 it changed direction by 90 degrees, which further assists with urging the edge of the plastic sheet 12 back on itself to 180 degrees as shown at 28. One or more of the guide roller 18, feed roller 20 having the rebated end 22, the conical pulley 24, and the drive roller 34 may be termed a folder device. The guide roller 18, the feed roller 20, and the drive roller 34 may be termed respective first, second and third rollers of the folder device. The conical pulley 24 may be termed a feed device. The drive roller 34 has a groove to guide the elastic cord 11 as the plastic sheet 12 passes around the drive roller 34. In Figure 1 the plastic sheet 12 then passes around an intermediate drive roller 36. The intermediate drive roller 36 further assists with driving the plastic film 11 through the apparatus 10, and may also provide an isolating effect for different parts of the plastic sheet 12. The drive roller 36 also has a groove (not shown) for the elastic cord 11. The edge of the plastic sheet 12 then passes between two heated rollers 38 which are urged towards each other during operation of the apparatus 10, as shown by arrows 40. Such movement of the heated rollers 38 may be provided by respective actuators such as hydraulic or pneumatic actuators (not shown). The speed of the circumferential surface of the two heated rollers 38 is matched. The two heated rollers 38 urge the plastic film 12 and the elastic cord 11 together, and also activate the adhesive so that the elastic cord 11 is bonded within the folded edge of the plastic film 12 as shown in Figure 3 or 7. The heated rollers 38 seal the folded edge of the plastic film 12 over the elastic cord 11 to encapsulate it. Such encapsulation is achieved by raising the temperature of the edge of the plastic film 11 and applying pressure with the rollers 38 to form a scarf joint. Together the rollers 38 and the actuators may be termed a bonding device. After the heated rollers 38 the plastic film as shown at 42 cools to set the adhesive, and then the plastic film 42 may then be further processed. It will be understood that the elastic cord 11 is introduced into the folded edge by the conical pulley 24 at a position that allows full encapsulation by the heated rollers 38. With such an arrangement the plastic film 11 as shown at 42 in Figure 1 has a tensioned elastic cord 11 encapsulated therein.

Also shown in Figure 1 is that the edge of the plastic film 12 may pass through a guide channel 39 prior to entering the heated rollers 38. The guide channel 39 comprises two plates which are about the same width as the folded edge and are spaced apart. In one arrangement the guide channel may be a folded plate whereby the free ends thereof are spaced apart. The guide channel 39 may assist with maintaining the edge of the plastic sheet 12 and the cord 11 together prior to entering the heated rollers 38.

Each of the rollers 34, 36, 38 has a groove on the surface thereof which corresponds to the required position of the elastic cord 11 in the finished plastic film 12. The grooves assist with setting up of the apparatus 10, and also keep the plastic film 12 and the elastic cord 11 in the required position as they pass through the apparatus 10.

In the above description the elastic cord 11 is described as being embedded at one edge of the plastic film 12. However, in some embodiments the elastic cord 11 is also embedded at both edges of the plastic film 12 so that it can be manufactured into items such as oversleeves or bin liners as discussed below. It will be appreciated that embedding the elastic cord 11 at both edges of the plastic film 12 requires duplication of certain parts of the apparatus 10 such as the conical pulley 24, the supply reel 30, and the heated rollers 38 to embed the elastic cord 11 in the second edge of the plastic film 12. Furthermore the rebated end 22 of the roller 20 is also required to be present at the other end thereof. However, such duplicated parts of the apparatus 10 have been omitted from Figure 1 for the purposes of clarity.

Figure 2 shows a perspective view of a part of the apparatus shown in Figure 1. In Figure 2 like features to the arrangements of Figure 1 are shown with like reference numerals. In Figure 2 the rebated end 22 of the feed roller 20 is shown which has a smaller diameter than the main body of the feed roller 20. Also show is the conical pulley 24 which fits into the folded edge of the plastic film 12 at 25. In Figure 2 the plastic film 12 is partially transparent and the conical pulley 24 is visible through the folded edge of the plastic film 12. The drive rollers 34, 36 are also visible through the partially transparent plastic film 12. The elastic cord 11 is shown to pass around the conical pulley 24 so that it is embedded in the folded edge of the plastic sheet 12 as it travels in the direction shown by arrow 27. Also shown in Figure 2 is a guide pulley 44 for the elastic cord 11, and a support 46 for the conical pulley 24 and the guide pulley 44. The guide pulley 44 and the support 46 are not shown in the schematic drawing of Figure 1 for the purposes of clarity. As shown in Figure 2, just prior to the 180 degree folding shown at 28 the elastic cord 11 is introduced. The elastic cord 11 is inserted between the folded edge and the plastic film 12 at a position that allows full encapsulation thereof.

Figure 3 is a schematic side view of the stages of manufacture of the plastic film 12 with the embedded elastic cord 11 using the apparatus 10 of Figures 1 and 2. In Figure 3 like features to the arrangements of Figures 1 and 2 are shown with like reference numerals. In Figure 3 about 4cm of one edge part of the plastic film 12 is shown in each of the drawings 3a to 3e. It will be understood that the other edge of the plastic film 12 also has an elastic cord embedded therein, but this has been omitted for the purposes of clarity. Figure 3a shows the adhesive application stage 16 of Figure 1 whereby the adhesive is applied to the edge of the plastic film 12 as shown at 50. The adhesive 50 is applied in a continuous line along the edge of the plastic film 12 with a width in the region 0.5cm to 2.0cm. Figure 3b shows the plastic film 12 after the hot-melt adhesive has dried (i.e. cooled) and at the point 26 shown in Figures 1 and 2 whereby the edge of the plastic film has been folded to about 90 degrees. Figure 3c shows the plastic film 12 after the elastic cord 11 has been introduced into the folded edge at approximately a mid-point between the conical pulley 24 and the point 28. Figure 3d shows the plastic film 12 after the point 28 where the edge thereof has been folded to 180 degrees. Figure 3e shows the plastic film 12 at the heated rollers 38 whereby the hot-melt adhesive is activated and the folded edge is compressed so that the elastic cord 11 is bonded within the folded edge. The folded edge holds the elastic cord 11 in position due to the adhesive which grips and bonds the elastic cord 11 along a length thereof to the plastic film 12. It will be understood that the adhesive is applied to one or both edges of the continuous plastic film 12 so that there is a continuous bed of adhesive along one or both edges of the plastic film 12. The elastic cord 11 is then laid into one or both edges of the plastic film prior to activation of the adhesive with heat and pressure.

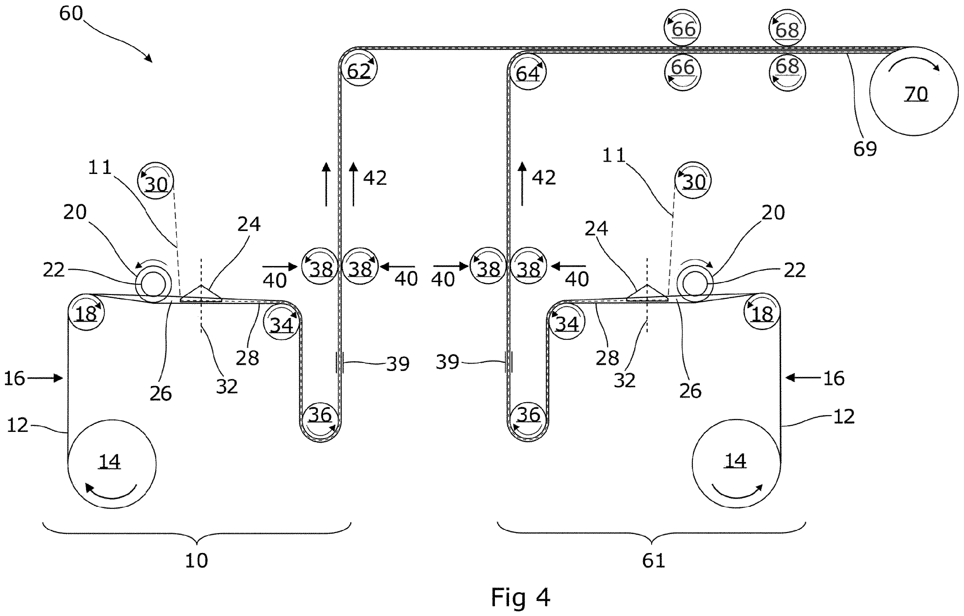

Figure 4 shows a schematic side view of an apparatus 60 for manufacturing tube or bag plastic film products according to an embodiment of the invention. In Figure 4 like features to the arrangements of Figure 1 and 2 are shown with like reference numerals. In Figure 4 the apparatus 60 is shown to comprise a first apparatus 10, which is the same as the apparatus of Figures 1 and 2, and a second apparatus 61, which comprises the same components as the apparatus 10 in a mirror arrangement. Each of the apparatus 10, 61 is operable to produce a respective plastic film 42 having the elastic cord 11 embedded at one or both edges thereof. Respective drive rollers 62, 64 receive the plastic film 42 from each of the apparatus 10, 61. The two plastic films 42 change direction by 90 degrees at the drive rollers 62, 64 so that the plastic films 42 are parallel to each other with the respective elastic cords 11 of one plastic film 42 adjacent to the elastic cords of the other plastic film 12. The two plastic films 42 then pass through a welding device comprising two weld rollers 66 which have a heated blade (not shown) to periodically weld the two plastic films 42 together across a width thereof. The periodic welds are about 19cm apart, and each weld is about 1cm in width. The distance between welds may be adjusted as required, for example, so that it is between 4cm to 30cm. After the welding device 66 the plastic films 42 then pass through a cutting device comprising two rollers 68 which have a perforation blade (not shown) to periodically perforate (i.e. partially cut) the two plastic films 42 across the welded joint thereof, and to cut the two elastic cords 11 at each edge thereof. It will be appreciated that the plastic sheets 42 have elastic cords 11 at both edges thereof such welding, perforation and cutting produces a plastic sheet at 69 that can be readily torn along each perforation to provide a tubular product, such as an oversleeve, which has an elastic cord 11 embedded around each opening thereof. The plastic sheet at 69 may then be wound onto a storage reel 70. The rollers 66, 68 are driven rollers.

In one embodiment each apparatus 10, 61 is operable to product the plastic film 42 with the elastic cord 11 embedded at one edge only. With such an arrangement the welding device 66 is operable to periodically weld the two plastic films across a width thereof, and to continuously weld the adjacent edge of the plastic films 42 without the elastic cords 11. The cutting device 68 then periodically perforates (i.e. partially cuts) the two plastic films 42 across the welded joint thereof, and cuts the two elastic cords 11 at the one edge thereof. With such an arrangement the apparatus 60 can be used to manufacture bag plastic products using two plastic films 42 which only have the elastic cord 11 embedded at one edge thereof. The bag plastic products produced using such an apparatus have an elastic cord 11 embedded around an opening thereof, and the sides and bottom of the bag comprise are welded.

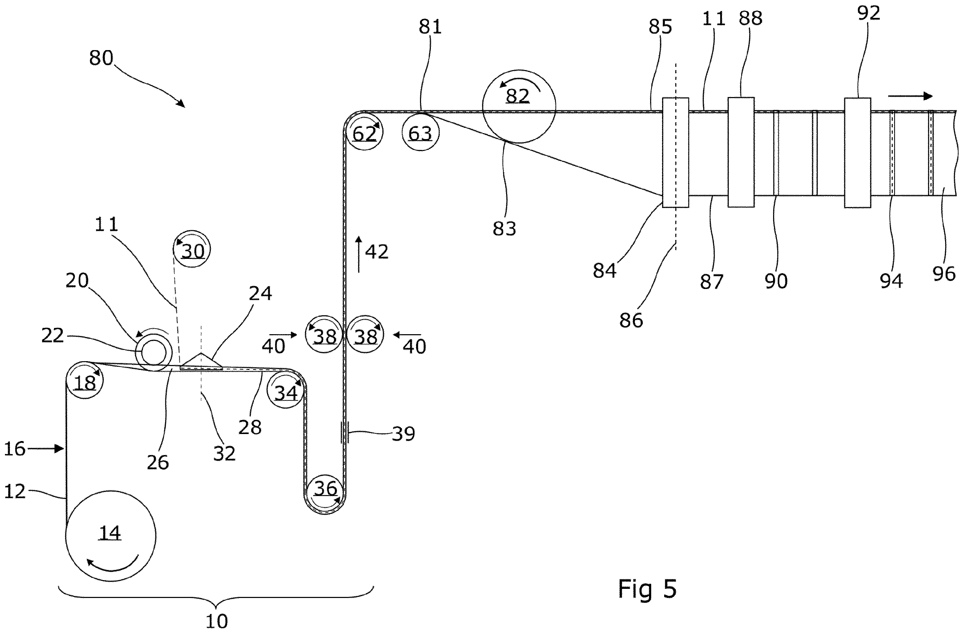

Figure 5 shows a schematic side view of an apparatus 80 for manufacturing bag plastic film products according to an embodiment of the invention. In Figure 5 like features to the arrangements of Figure 1, 2 and 4 are shown with like reference numerals. In Figure 5 the apparatus 80 is shown to comprise the apparatus 10, which is the same as the apparatus of Figures 1 and 2. After the drive roller 62 the apparatus 80 has a folder device comprising a roller 63 and a folder wheel 82. The roller 63 runs along the complete width of the plastic film 12. The folder wheel 82 runs along the centre of the plastic film 12 between the elastic cords 11 and operates to push a centre of the plastic sheet 42 downward as shown at 83. The folder device also comprises a guide roller 84. The folder device 63, 82, 84 operates to fold the plastic film 12 and to turn the plastic film 42 through 90 degrees such that the plastic film 42 runs into the plane of drawing at 81 and is parallel with the plane of the drawings at 85.

As shown in Figure 5 the guide roller 84 rotates around an axis 86 that is parallel with the plane of the drawing such that after the guide roller 84 the folded plastic film 42 shown at 87 has two elastic cords 11 along one edge thereof. The folded plastic film 42 then passes through a welding device comprising two weld rollers 88 (only one of which is shown) which have a heated blade (not shown) to periodically weld the folded plastic film 42 together across a width thereof as shown at 90. The periodic welds 90 are about 19cm apart, and each weld is about 1cm in width. The distance between welds 90 may be adjusted as required, for example, so that it is between 4cm to 30cm. After the welding device 88 the folded plastic film 42 then pass through a cutting device comprising two rollers 90 (only one of which is shown) which have a perforation blade (not shown) to periodically perforate the folded plastic film 42 across the weld 90 as shown at 94. The cutting device 92 also cuts the two elastic cords 11 at the one edge of the folded plastic film 42. It will be appreciated that such welding, perforation and cutting produces a plastic sheet at 96 that can be readily torn along each perforation 94 to provide a bag product, such as an overshoe or a bin liner, which has an elastic cord 11 embedded around the opening thereof. The plastic sheet at 96 may then be wound onto a storage reel (not shown). The rollers 84, 88, 92 are driven rollers.

In Figure 5 it will be appreciated that the rollers 14, 18, 20, 30, 34, 36, 38, 62, 63 and the wheel 82 rotate about axes that are perpendicular to the plane of the drawing, whereas rollers 84, 88, 92 rotate around axes that are parallel with the plane of the drawing.

In the above embodiments the various rollers 14, 18, 20, 30, 34, 36, 38, 62, 63, 66, 68, 70, 84, 88, 92, the wheel 82, and the guide channel 39 operate to steer and centre the plastic film 12, 42 through the apparatus 10, 60, 80. Additional rollers or guides such as intermediate drive rollers or intermediate idler rollers may also be used to guide the plastic film 12 through the apparatus 10, 60, 80 but these have been omitted for the purposes of clarity. In the above description the various rollers 14, 18, 20, 30, 34, 36, 38, 62, 63, 66, 68, 70, 84, 88, 92 may alternatively be termed cylinders.

The above embodiments describe an apparatus 10, 61 for producing a plastic film 42 having an elastic cord 11 at each edge thereof. It will be appreciated that the elastic cord 11 is embedded at or adjacent to the edges of the plastic film 42. The above embodiments also describe apparatus 60 for making tube plastic film products that are open at both ends of the tube, such as oversleeves. Furthermore, the above embodiments also describe apparatus 80 for making bag plastic film products having a closed end, such as bin liners, hair nets, overshoes etc. It will be understood from the foregoing that the tube plastic film products have an elastic cord 11 embedded around each end thereof, and in the case of the tube plastic film product being an oversleeve each end thereof can be secured around the wrist and the elbow of the user. It will also be understood from the foregoing that the bag plastic film products have an elastic cord 11 embedded around the opening thereof, and in the case of the bag plastic film product being an overshoe or bin liner the end thereof can be secured around the ankle of the user, or around an opening of a dust bin.

It will be understood that during operation of the apparatus 10, 60, 80 the plastic film 12, 42 is at a constant speed in the apparatus 10. One or more sensing devices (not shown) may be used to monitor the speed of plastic film 12, 42 as it passes through the apparatus 10, 42. In one arrangement the sensing device comprises one or more of the rollers 14, 18, 20, 30, 34, 36, 38, 62, 63, 66, 68, 70, 84, 88, 92 and the wheel 82 have a speed sensor to determine the speed of rotation as indicated by one or more of the arrows thereon in the Figures 1, 2, 4, 5. Alternatively the sensing devices may be cameras (not shown). The sensing devices are coupled to a control device (not shown) which has a processor to communicate with the drive rollers 18, 34, 36, 38, 62, 63, 64, 66, 68, 84, 88, 92 to adjust the speed of the plastic sheet 12, 42 through the apparatus 10, 60, 80 and the amount of glue applied at 16, and the actuators operating the heated rollers 38 as required. The sensing devices provide a feedback mechanism to maintain the operation of the apparatus 10, 60, 80.

In the above embodiments one or more of the rollers 14, 18, 20, 30, 34, 36, 38, 62, 63, 66, 68, 70, 84, 88, 92, or the wheel 82 may be a driven roller or wheel, or may be an idler roller or wheel to assist with passage of the plastic sheet 12, 42 through the apparatus 10, 60, 80 and to provide the required feeding of the plastic film 12, 42 through the apparatus 10, 60, 80. The driven rollers are powered by one or more electric motors (not shown). One or more of the driven rollers may have rubber surfaces to assist with gripping of the plastic film 12, 42.

The heated rollers 38 and the welding device of the apparatus 10, 60, 80 are heated so that a surface thereof has a temperature in the region of 80 to 110 degrees. Heating of the rollers 38 and the welding device may be achieved using hot oil passing through them, or using electrical heating elements according to known arrangements. The heated rollers 38 and the welding device may have a surface with a high heat conductivity, such as a copper surface, to assist with welding of the plastic film 12, 42.

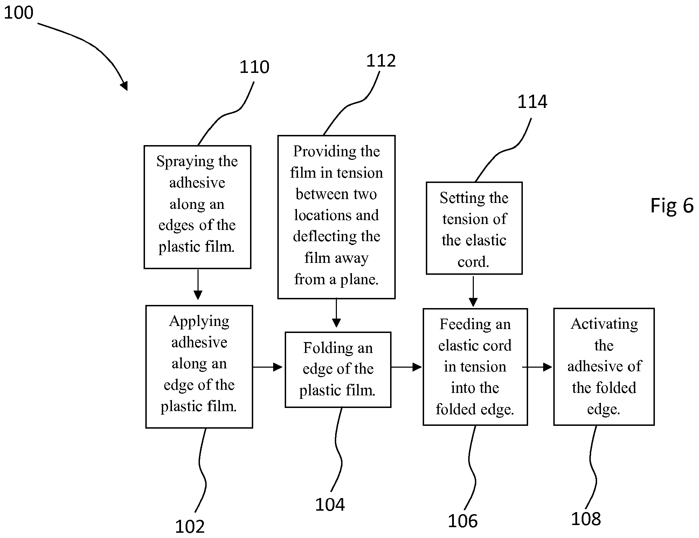

Figure 6 shows a diagram of a method according to an embodiment of the invention, generally designated 100. It will be appreciated that the steps may be performed in a different order, and may not necessarily be performed in the order shown in Figure 6. The method 100 is a method of embedding a continuous elastic cord 11 along an edge of a continuous plastic film 12.

The method includes applying an adhesive along the edge of the plastic film 12, as shown at 102. The method includes folding the edge of the plastic film 12 so that the adhesive is within a folded edge, as shown at 104. The method includes feeding the elastic cord 11 in tension into the folded edge so that the elastic cord 11 is in contact with the adhesive of the edge, as shown at 106. The method includes activating the adhesive of the folded edge to bond the elastic cord 11 in tension to the adhesive within the folded edge and to bond the folded edge to the plastic film 12, as shown at 108.

The method includes embedding another continuous elastic cord 11 at an opposing edge of the continuous plastic film 12. The method includes applying the adhesive to the opposing edge of the plastic film 12, as shown at 102. The method includes folding an opposing edge of the plastic film 12 so that the adhesive is within the opposing folded edge, as shown at 104. The method includes feeding the other elastic cord 11 in tension into the opposing folded edge so that said other elastic cord 11 is in contact with the adhesive of the opposing edge, as shown at 106. The method includes activating the adhesive of the opposing folded edge to bond the other elastic cord 11 in tension to the adhesive within the opposing folded edge and to bond the opposing folded edge to the plastic film 12, as shown at 108.

The method includes spraying the adhesive along one or both edges of the plastic film 12, as shown at 110. The method further includes applying the adhesive along one or both edges of the plastic film 12 with a width in the range 0.5 to 2.0cm. Said folding the one or both edges of the plastic film 12 comprises providing the plastic film 12 in tension between two locations 18, 34 and deflecting the plastic film 12 away from a plane between said locations 18, 34 using a roller 20 in order to turn one or both edges of the plastic film 12 around a respective end of the roller 20, as shown at 112.

Said feeding comprises using a respective pulley wheel 24 to introduce a respective elastic cord 11 into an associated folded edge. Said feeding comprises setting the tension of the one or more elastic cords, as shown at 114.

The method includes using a hot-melt adhesive. The method further includes heating the adhesive to provide said activation thereof, as shown at 108. The method further includes applying pressure to one or both folded edges, as shown at 108. The method further includes using a thermoplastic for the plastic film 12. The method further includes using a single strand for each elastic cord 11.

In one arrangement the method further includes folding the plastic film 12 so that the elastic cords 11 of respective edges are adjacent to one another. In another arrangement the method further includes providing two continuous plastic films 12, each film having at least one elastic cord 11 at a respective edge thereof, the method including position the two plastic films 12 so that they are face to face with one another and so that respective elastic cords 11 of each film 12 are adjacent to one another.

The method further includes periodically welding the one or more plastic films 12 together across a width thereof, said welds being spaced apart along a length of the one or more plastic films 12. The method further includes continuously welding the two plastic films 12 along a length thereof in order to weld the respective edges of the two plastic films together.

The method further includes cutting the elastic cords 11 at each weld of the one or more plastic films 12, and perforating the one or more plastic films 12along each weld across the width thereof. In one arrangement the method further includes manufacturing bag products comprising overshoes, hair nets or bin liners. In another arrangement the method further includes further including manufacturing tube products comprising oversleeves.

Figure 7 is a schematic side view of the stages of manufacture of the plastic film with the embedded elastic cord using the apparatus of Figures 1 and 2 according to another embodiment. In Figure 7 like features to the arrangements of Figures 1, 2 and 3 are shown with like reference numerals. In Figure 7 about 4cm of one edge part of the plastic film 12 is shown in each of the drawings 7a to 7e. It will be understood that the other edge of the plastic film 12 also has an elastic cord embedded therein, but this has been omitted for the purposes of clarity. Figure 7a shows the adhesive application stage 16 of Figure 1 whereby a bead of the adhesive is applied to the edge of the plastic film 12 as shown at 50. The bead of adhesive 50 is applied in a continuous line along the edge of the plastic film 12 with a diameter in the region 0.4mm to 1mm. Figure 7b shows the plastic film 12 after the hot-melt adhesive has dried (i.e. cooled) and at the point 26 shown in Figures 1 and 2 whereby the edge of the plastic film has been folded to about 90 degrees. Figure 7c shows the plastic film 12 after the elastic cord 11 has been introduced into the folded edge at approximately a mid-point between the conical pulley 24 and the point 28. Figure 7d shows the plastic film 12 after the point 28 where the edge thereof has been folded to 180 degrees. Figure 7e shows the plastic film 12 at the heated rollers 38 whereby the hot-melt adhesive is activated and the folded edge is compressed so that the elastic cord 11 is bonded within the folded edge. The folded edge holds the elastic cord 11 in position due to the adhesive which grips and bonds the elastic cord 11 along a length thereof to the plastic film 12. It will be understood that the adhesive is applied to one or both edges of the continuous plastic film 12 so that there is a continuous bed of adhesive along one or both edges of the plastic film 12. The elastic cord 11 is then laid into one or both edges of the plastic film prior to activation of the adhesive with heat and pressure.

A pressured nozzle may be used to apply the bead of adhesive. The pressured nozzle lays the bead of adhesive onto the plastic film 12 as shown at 16 so that the bead is stuck to the plastic film 12. In such an arrangement the pressurised nozzle is provided in communication with a pressurised reservoir (not shown) of the adhesive, for example a heated bath of hot-melt adhesive. The reservoir is provided under pressure by a suitable pump. A solenoid valve is used to open the pressurised nozzle to apply the bead of adhesive onto the edge of the plastic film 12. Using such a pressurised nozzle and solenoid valve may provide the advantage of an improved accuracy for applying the adhesive. Furthermore, such an arrangement may provide an improved start-up of the apparatus 10 when the plastic sheet 12 is accelerated from 0 m/s to 50 m/s or faster. In an alternative arrangement a swirl or strip of the adhesive may be applied to the edge of the plastic film 12. The adhesive applied may be continuous strip or continuous line of the adhesive.

In the above embodiments one or more of the rollers 14, 18, 20, 30, 34, 36, 38, 62, 63, 66, 68, 70, 84, 88, 92, or the wheel 82 are a drum or cylinder. It is also envisaged that one or more of the rollers 14, 18, 20, 30, 34, 36, 38, 62, 63, 66, 68, 70, 84, 88, 92, or the wheel 82 could be a belt, i.e. a continuous belt, having a flexible surface. With such an arrangement the belt may not be circular in shape, and may pass over a plurality of belt rollers, such as three of four belt rollers, during operation of the apparatus 10, 60, 80. Furthermore it is also envisaged that one or more of the rollers 14, 18, 20, 30, 34, 36, 38, 62, 63, 66, 68, 70, 84, 88, 92 could be a wheel or any circular device operable to allow the plastic film 12 to run over it.

In the above description the elastic cord 11 may be any suitable elastic cord 11 such as an elastic wire or elastic line, which may be a single strand or a multiple strands twisted together. The elastic cord 11 may be rubber or any suitable synthetic cord that is resilient. In a preferred embodiment the elastic cord 11 is a single thread elastomer which is available under the trade name DTEX.

The apparatus 10, 60, 80 described herein provides the advantage of a continuous process for manufacturing the plastic film 12, 42 having the encapsulated cord 11, which improves the speed of manufacture and the cost of manufacture thereof. The apparatus 10, 60, 80 may be used to manufacture any plastic film 12, 42 requiring an elastic cord 11 therein, such as plastic overshoes, oversleeves, hair nets, disposable bin liners, steering wheel covers, seat covers, vehicle covers, fire alarm covers, etc or any other cover used to protect items such as machinery or equipment that may be large or small.

The apparatus 10, 60, 80 described herein has an electronic controller device (not shown) to control the operation of the various parts of the apparatus 10, 60, 80. Such a controller device may be operable to control the speed of the various rollers 14, 18, 20, 30, 34, 36, 38, 62, 63, 66, 68, 70, 84, 88, 92, or the wheel 82, the operation of the adhesive application stage 16, the operation of the tension device, the operation of the heated rollers 38, the operation of the welding device 66, 88, the operation of the perforation device 68, 92, and the operation of the storage reel 70. The skilled person will understand the requirements of such a controller device and it will not be described further.

## Claims

1. An apparatus (10) for embedding a continuous elastic cord (11) along an edge of a continuous plastic sheet (12), comprising an adhesive applicator device operable to apply an adhesive (16) along the edge of the plastic sheet (12), a folder device (18, 20, 24) operable to provide a folded edge of the plastic sheet so that the adhesive is within the folded edge, and a feed device (24) having a tension device (30) operable to feed the elastic cord (11) in tension into the folded edge so that the elastic cord (11) is in contact with the adhesive of the edge, a bonding device that is operable to activate the adhesive of the folded edge to bond the elastic cord (11) in tension to the adhesive within the folded edge and to bond the folded edge to the plastic sheet (12), **characterised by**:
the adhesive applicator device being arranged to apply the adhesive (16) prior to the folder device being arranged to fold the edge of the plastic sheet (12).

2. An apparatus according to claim 1, operable to embed another continuous elastic cord (11) at an opposing edge of the continuous plastic sheet (12), comprising another adhesive applicator device operable to apply the adhesive (16) to the opposing edge of the plastic sheet (12), the folder device (18, 20, 24) operable to provide an opposing folded edge of the plastic sheet so that the adhesive is within the opposing folded edge, and another feed device (24) having a respective tension device (30) operable to feed the other elastic cord (11) in tension into the opposing folded edge so that said other elastic cord (11) is in contact with the adhesive of the opposing edge, wherein another bonding device is operable to activate the adhesive of the opposing folded edge to bond the other elastic cord (11) in tension to the adhesive within the opposing folded edge and to bond the opposing folded edge to the plastic sheet (12)), **characterised by**:
said another adhesive applicator device being arranged to apply the adhesive (16) prior to the folder device being arranged to fold the opposing edge of the plastic sheet (12).

3. An apparatus according to claim 1 or 2, wherein the one or more adhesive applicator devices comprise a respective spray device operable to spray the adhesive along one or both edges of the plastic sheet (12), or a pressurised nozzle device to apply a bead or continuous strip of the adhesive along one or both edges of the plastic sheet (12).

4. An apparatus according to any preceding claim, wherein the folder device comprises a first roller (18), a second roller (20) and a third roller (34), the plastic sheet (12) being provided in tension between the first and third rollers (18, 34), the second roller (20) being between the first and third rollers (18, 34) and operable deflect the plastic sheet (12) away from a plane between the first and third rollers (18, 34) such that the second roller (20) is operable to turn one or both edges of the plastic sheet (12) around a respective end (22) of the second roller (20), and wherein the one or both folded edges of the plastic sheet (12) are provided at the third roller (34).

5. An apparatus according to any preceding claim, wherein each feed device (24) comprise a respective pulley wheel (24) such that a respective elastic cord (11) is arranged to pass around a part-circumference of its associated pulley wheel (24), an edge of the respective pulley wheel is arranged to be within an associated folded edge to provide said feed of the respective elastic cord (11) into the associated folded edge.

6. An apparatus according to claim 5 when dependent on claim 4, wherein the edge of the respective pulley wheel (24) is within its associated folded edge at a position between the second and third rollers (20, 34).

7. An apparatus according to any preceding claim, wherein the adhesive is a hot-melt adhesive.

8. An apparatus according to claim 7, wherein the one or more bonding devices comprise at least one heated roller to heat the adhesive and to provide said activation thereof.

9. An apparatus according to any preceding claim, wherein the one or more bonding devices (38) have an actuator to apply pressure to one or both folded edges.

10. A method (100) of embedding a continuous elastic cord (11) along an edge of a continuous plastic sheet (12), comprising:
applying (102) an adhesive along the edge of the plastic sheet (12);
folding (104) the edge of the plastic sheet (12) so that the adhesive is within a folded edge;
feeding (106) the elastic cord (11) in tension into the folded edge so that the elastic cord (11) is in contact with the adhesive of the edge; activating (108) the adhesive of the folded edge to bond the elastic cord (11) in tension to the adhesive within the folded edge and to bond the folded edge to the plastic sheet (12), **characterised by**:
said applying (102) the adhesive (12) is performed prior to said folding (104) the edge of the plastic sheet (12).

11. A method (100) according to claim 10, and further including embedding another continuous elastic cord (11) at an opposing edge of the continuous plastic sheet (12), comprising:
applying (102) the adhesive to the opposing edge of the plastic sheet (12);
folding (104) an opposing edge of the plastic sheet (12) so that the adhesive is within the opposing folded edge;
feeding (106) the other elastic cord (11) in tension into the opposing folded edge so that said other elastic cord (11) is in contact with the adhesive of the opposing edge; and
activating (108) the adhesive of the opposing folded edge to bond the other elastic cord (11) in tension to the adhesive within the opposing folded edge and to bond the opposing folded edge to the plastic sheet (12), **characterised by**:
said applying (102) the adhesive to the opposing edge is performed prior to said folding (104) the opposing edge of the plastic sheet (12).

12. A method according to claim 10 or 11, and further including spraying (11) the adhesive along one or both edges of the plastic sheet (12), or applying a bead or continuous strip of the adhesive along one or both edges of the plastic sheet (12).

13. A method according to any of claims 10 to 12, wherein said folding (104) the one or both edges of the plastic sheet (12) comprises providing the plastic sheet (12) in tension between two locations and deflecting the plastic sheet away from a plane (112) between said locations using a roller (20) in order to turn one or both edges of the plastic sheet (12) around a respective end of the roller (20).

14. A method according to any of claims 10 to 13, wherein said feeding (106) comprises using a respective pulley wheel (24) to introduce a respective elastic cord (11) into an associated folded edge.

15. A method according to any of claims 10 to 14, and further including using a hot-melt adhesive.

16. A method according to claim 15, and further including heating the adhesive to provide said activation thereof.

17. A method according to any of claims 10 to 16, and further including applying pressure to one or both folded edges.

18. A method according to claim any of claims 10 to 17 and further including manufacturing bag products comprising overshoes, hair nets, bin liners, steering wheel covers, seat covers, vehicle covers, or fire alarm covers, or other protection covers using the one or more plastic sheets.

19. A method according to claim 10, and further including manufacturing tube products comprising oversleeves or other covers using the one or more plastic sheet.

## Patentansprüche

1. Vorrichtung (10) zum Einbetten einer durchgehenden elastischen Schnur (11) entlang einer Kante einer durchgehenden Kunststofffolie (12), umfassend eine Klebstoffapplikatorvorrichtung, die bedienbar ist, um einen Klebstoff (16) entlang der Kante der Kunststofffolie (12) aufzutragen, eine Faltvorrichtung (18, 20, 24), die bedienbar ist, um eine gefaltete Kante der Kunststofffolie bereitzustellen, sodass sich der Klebstoff innerhalb der gefalteten Kante befindet, und eine Zuführvorrichtung (24), die eine Spannvorrichtung (30) aufweist, die bedienbar ist, um die elastische Schnur (11) in Spannung in die gefaltete Kante zuzuführen, sodass die elastische Schnur (11) in Kontakt mit dem Klebstoff der Kante ist, eine Verbindungsvorrichtung, die bedienbar ist, um den Klebstoff der gefalteten Kante zu aktivieren, um die elastische Schnur (11) in Spannung mit dem Klebstoff innerhalb der gefalteten Kante zu verbinden und um die gefaltete Kante mit der Kunststofffolie (12) zu verbinden, **dadurch gekennzeichnet, dass**:
die Klebstoffapplikatorvorrichtung angeordnet ist, um den Klebstoff (16) aufzutragen, bevor die Faltvorrichtung angeordnet wird, um die Kante der Kunststofffolie (12) zu falten.

2. Vorrichtung nach Anspruch 1, die bedienbar ist, um eine weitere durchgehende elastische Schnur (11) an einer gegenüberliegenden Kante der durchgehenden Kunststofffolie (12) einzubetten, umfassend eine weitere Klebstoffapplikatorvorrichtung, die bedienbar ist, um den Klebstoff (16) auf der gegenüberliegenden Kante der Kunststofffolie (12) aufzutragen, wobei die Faltvorrichtung (18, 20, 24) bedienbar ist, um eine gegenüberliegende gefaltete Kante der Kunststofffolie bereitzustellen, sodass sich der Klebstoff innerhalb der gegenüberliegenden gefalteten Kante befindet, und eine weitere Zuführvorrichtung (24), die eine jeweilige Spannvorrichtung (30) aufweist, die bedienbar ist, um die weitere elastische Schnur (11) in Spannung in die gegenüberliegende gefaltete Kante zuzuführen, sodass die weitere elastische Schnur (11) in Kontakt mit dem Klebstoff der gegenüberliegenden Kante ist, wobei eine weitere Verbindungsvorrichtung bedienbar ist, um den Klebstoff der gegenüberliegenden gefalteten Kante zu aktivieren, um die weitere elastische Schnur (11) in Spannung mit dem Klebstoff innerhalb der gegenüberliegenden gefalteten Kante zu verbinden und um die gegenüberliegende gefaltete Kante mit der Kunststofffolie (12) zu verbinden, **dadurch gekennzeichnet, dass**:
die weitere Klebstoffapplikatorvorrichtung angeordnet ist, um den Klebstoff (16) aufzutragen, bevor die Faltvorrichtung angeordnet wird, um die gegenüberliegende Kante der Kunststofffolie (12) zu falten.

3. Vorrichtung nach Anspruch 1 oder 2, wobei die eine oder die mehreren Klebstoffapplikatorvorrichtungen eine jeweilige Sprühvorrichtung, die bedienbar ist, um den Klebstoff entlang einer oder beider Kanten der Kunststofffolie (12) zu sprühen, oder eine Druckdüsenvorrichtung umfassen, um einen Tropfen oder durchgehenden Streifen des Klebstoffes entlang einer oder beider Kanten der Kunststofffolie (12) aufzutragen.

4. Vorrichtung nach einem vorhergehenden Anspruch, wobei die Faltvorrichtung eine erste Walze (18), eine zweite Walze (20) und eine dritte Walze (34) umfasst, wobei die Kunststofffolie (12) in Spannung zwischen der ersten und der dritten Walze (18, 34) bereitgestellt ist, wobei die zweite Walze (20) zwischen der ersten und der dritten Walze (18, 34) ist und bedienbar ist, um die Kunststofffolie (12) weg von einer Ebene zwischen der ersten und der dritten Walze (18, 34) abzulenken, sodass die zweite Walze (20) bedienbar ist, um eine oder beide Kanten der Kunststofffolie (12) um ein jeweiliges Ende (22) der zweiten Walze (20) zu drehen, und wobei die eine oder die beiden gefalteten Kanten der Kunststofffolie (12) an der dritten Walze (34) bereitgestellt sind.

5. Vorrichtung nach einem vorhergehenden Anspruch, wobei jede Zuführvorrichtung (24) eine jeweilige Riemenscheibe (24) umfasst, sodass eine jeweilige elastische Schnur (11) angeordnet ist, um einen Teilumfang ihrer zugehörigen Riemenscheibe (24) zu umlaufen, wobei eine Kante der jeweiligen Riemenscheibe angeordnet ist, um sich innerhalb einer zugehörigen gefalteten Kante zu befinden, um die Zuführung der jeweiligen elastischen Schnur (11) in die zugehörige gefaltete Kante bereitzustellen.

6. Vorrichtung nach Anspruch 5, wenn von Anspruch 4 abhängig, wobei sich die Kante der jeweiligen Riemenscheibe (24) innerhalb ihrer zugehörigen gefalteten Kante an einer Position zwischen der zweiten und der dritten Walze (20, 34) befindet.

7. Vorrichtung nach einem vorhergehenden Anspruch, wobei der Klebstoff ein Heißschmelzklebstoff ist.

8. Vorrichtung nach Anspruch 7, wobei die eine oder mehreren Verbindungsvorrichtungen zumindest eine beheizte Walze umfassen, um den Klebstoff zu erwärmen und um die Aktivierung davon bereitzustellen.

9. Vorrichtung nach einem vorhergehenden Anspruch, wobei die eine oder die mehreren Verbindungsvorrichtungen (38) einen Aktuator aufweisen, um Druck auf eine oder beide gefalteten Kanten auszuüben.

10. Verfahren (100) zum Einbetten einer durchgehenden elastischen Schnur (11) entlang einer Kante einer durchgehenden Kunststofffolie (12), umfassend:
Auftragen (102) eines Klebstoffes entlang der Kante der Kunststofffolie (12);
Falten (104) der Kante der Kunststofffolie (12), sodass sich der Klebstoff innerhalb einer gefalteten Kante befindet;
Zuführen (106) der elastischen Schnur (11) in Spannung in die gefaltete Kante, sodass die elastische Schnur (11) in Kontakt mit dem Klebstoff der Kante ist; Aktivieren (108) des Klebstoffes der gefalteten Kante, um die elastische Schnur (11) in Spannung mit dem Klebstoff innerhalb der gefalteten Kante zu verbinden und um die gefaltete Kante mit der Kunststofffolie (12) zu verbinden, **dadurch gekennzeichnet, dass**:
das Auftragen (102) des Klebstoffes (12) vor dem Falten (104) der Kante der Kunststofffolie (12) durchgeführt wird.

11. Verfahren (100) nach Anspruch 10, und ferner beinhaltend das Einbetten einer weiteren durchgehenden elastischen Schnur (11) an einer gegenüberliegenden Kante der durchgehenden Kunststofffolie (12), umfassend:
Auftragen (102) des Klebstoffes auf die gegenüberliegende Kante der Kunststofffolie (12);
Falten (104) einer gegenüberliegenden Kante der Kunststofffolie (12), sodass sich der Klebstoff innerhalb der gegenüberliegenden gefalteten Kante befindet;
Zuführen (106) der weiteren elastischen Schnur (11) in Spannung in die gegenüberliegende gefaltete Kante, sodass die weitere elastische Schnur (11) in Kontakt mit dem Klebstoff der gegenüberliegenden Kante ist; und
Aktivieren (108) des Klebstoffes der gegenüberliegenden gefalteten Kante, um die weitere elastische Schnur (11) in Spannung mit dem Klebstoff innerhalb der gegenüberliegenden gefalteten Kante zu verbinden und um die gegenüberliegende gefaltete Kante mit der Kunststofffolie (12) zu verbinden, **dadurch gekennzeichnet, dass**:
das Auftragen (102) des Klebstoffes auf die gegenüberliegende Kante vor dem Falten (104) der gegenüberliegenden Kante der Kunststofffolie (12) durchgeführt wird.

12. Verfahren nach Anspruch 10 oder 11, und ferner beinhaltend das Sprühen (11) des Klebstoffes entlang einer oder beider Kanten der Kunststofffolie (12) oder das Auftragen eines Tropfens oder durchgehenden Streifens des Klebstoffes entlang einer oder beider Kanten der Kunststofffolie (12).

13. Verfahren nach einem der Ansprüche 10 bis 12, wobei das Falten (104) der einen oder beider Kanten der Kunststofffolie (12) das Bereitstellen der Kunststofffolie (12) in Spannung zwischen zwei Stellen und das Ablenken der Kunststofffolie weg von einer Ebene (112) zwischen den Stellen unter Verwendung einer Walze (20) umfasst, um eine oder beide Kanten der Kunststofffolie (12) um ein jeweiliges Ende der Walze (20) zu drehen.

14. Verfahren nach einem der Ansprüche 10 bis 13, wobei das Zuführen (106) das Verwenden einer jeweiligen Riemenscheibe (24) umfasst, um eine jeweilige elastische Schnur (11) in eine zugehörige gefaltete Kante einzuführen.

15. Verfahren nach einem der Ansprüche 10 bis 14, und ferner beinhaltend das Verwenden eines Heißschmelzklebstoffes.

16. Verfahren nach Anspruch 15, und ferner beinhaltend das Erwärmen des Klebstoffes, um die Aktivierung davon bereitzustellen.

17. Verfahren nach einem der Ansprüche 10 bis 16, und ferner beinhaltend das Ausüben von Druck auf eine oder beide gefalteten Kanten.

18. Verfahren nach einem der Ansprüche 10 bis 17 und ferner beinhaltend das Herstellen von Beutelprodukten, umfassend Überschuhe, Haarnetze, Müllbeutel, Lenkradabdeckungen, Sitzbezüge, Fahrzeugabdeckungen oder Feueralarmabdeckungen oder weitere Schutzabdeckungen unter Verwendung der einen oder mehreren Kunststofffolien.

19. Verfahren nach Anspruch 10, und ferner beinhaltend das Herstellen von Rohrprodukten, die Überhülsen oder andere Abdeckungen umfassen, unter Verwendung der einen oder mehreren Kunststofffolien.

## Revendications

1. Appareil (10) destiné à incruster un cordon élastique continu (11) le long d'un bord d'une feuille plastique continue (12), comprenant un dispositif applicateur d'adhésif utilisable pour appliquer un adhésif (16) le long du bord de la feuille plastique (12), un dispositif de pliage (18, 20, 24) utilisable pour fournir un bord plié de la feuille de plastique de sorte que l'adhésif se trouve à l'intérieur du bord plié, et un dispositif d'alimentation (24) ayant un dispositif de tension (30) utilisable pour alimenter le cordon élastique (11) en tension dans le bord plié de sorte que le cordon élastique (11) se trouve en contact avec l'adhésif du bord, un dispositif de collage utilisable pour activer l'adhésif du bord plié pour coller le cordon élastique (11) en tension à l'adhésif à l'intérieur du bord plié et pour coller le bord plié à la feuille plastique (12), **caractérisé par** :
le dispositif applicateur d'adhésif étant agencé pour appliquer l'adhésif (16) avant que le dispositif de pliage ne soit agencé pour plier le bord de la feuille plastique (12).

2. Appareil selon la revendication 1, utilisable pour incruster un autre cordon élastique continu (11) au niveau d'un bord opposé de la feuille plastique continue (12), comprenant un autre dispositif applicateur d'adhésif utilisable pour appliquer l'adhésif (16) sur le bord opposé de la feuille plastique (12), le dispositif de pliage (18, 20, 24) utilisable pour fournir un bord plié opposé de la feuille plastique de sorte que l'adhésif se trouve à l'intérieur du bord plié opposé, et un autre dispositif d'alimentation (24) ayant un dispositif de tension respectif (30) utilisable pour alimenter l'autre cordon élastique (11) en tension dans le bord plié opposé de sorte que ledit autre cordon élastique (11) se trouve en contact avec l'adhésif du bord opposé, dans lequel un autre dispositif de collage est utilisable pour activer l'adhésif du bord plié opposé pour coller l'autre cordon élastique (11) en tension à l'adhésif à l'intérieur du bord plié opposé et pour coller le bord plié opposé à la feuille plastique (12), **caractérisé par** :
ledit autre dispositif applicateur d'adhésif étant agencé pour appliquer l'adhésif (16) avant que le dispositif de pliage ne soit agencé pour plier le bord opposé de la feuille plastique (12).

3. Appareil selon la revendication 1 ou 2, dans lequel l'un ou plusieurs dispositifs applicateurs d'adhésif comprennent un dispositif de pulvérisation respectif utilisable pour pulvériser l'adhésif le long d'un ou des deux bords de la feuille plastique (12), ou un dispositif de buse pressurisée pour appliquer une perle ou bande continue de l'adhésif le long d'un ou des deux bords de la feuille plastique (12).

4. Appareil selon l'une quelconque des revendications précédentes, dans lequel le dispositif de pliage comprend un premier rouleau (18), un deuxième rouleau (20) et un troisième rouleau (34), la feuille plastique (12) étant mise en tension entre les premier et troisième rouleaux (18, 34), le deuxième rouleau (20) étant entre les premier et troisième rouleaux (18, 34) et utilisable pour dévier la feuille plastique (12) à l'écart d'un plan entre les premier et troisième rouleaux (18, 34) de telle sorte que le deuxième rouleau (20) soit utilisable pour tourner un ou les deux bords de la feuille plastique (12) autour d'une extrémité respective (22) du deuxième rouleau (20), et dans lequel l'un ou les deux bords pliés de la feuille plastique (12) sont prévus au niveau du troisième rouleau (34).

5. Appareil selon l'une quelconque des revendications précédentes, dans lequel chaque dispositif d'alimentation (24) comprend une roue de poulie respective (24) de telle sorte qu'un cordon élastique respectif (11) soit agencé pour passer autour d'une circonférence partielle de sa roue de poulie associée (24), un bord de la roue de poulie respective est agencé pour être à l'intérieur d'un bord plié associé pour fournir ladite alimentation du cordon élastique respectif (11) dans le bord plié associé.

6. Appareil selon la revendication 5 lorsqu'elle dépend de la revendication 4, dans lequel le bord de la roue de poulie respective (24) se trouve à l'intérieur de son bord plié associé à une position entre les deuxième et troisième rouleaux (20, 34).

7. Appareil selon l'une quelconque des revendications précédentes, dans lequel l'adhésif est un adhésif thermofusible.

8. Appareil selon la revendication 7, dans lequel l'un ou plusieurs dispositifs de collage comprennent au moins un rouleau chauffé pour chauffer l'adhésif et pour fournir ladite activation de celui-ci.

9. Appareil selon l'une quelconque des revendications précédentes, dans lequel l'un ou plusieurs dispositifs de collage (38) ont un actionneur pour appliquer une pression sur un ou les deux bords pliés.

10. Procédé (100) d'incrustation d'un cordon élastique continu (11) le long d'un bord d'une feuille plastique continue (12), comprenant :
l'application (102) d'un adhésif le long du bord de la feuille plastique (12) ;
le pliage (104) du bord de la feuille plastique (12) de sorte que l'adhésif se trouve à l'intérieur d'un bord plié ;
l'alimentation (106) du cordon élastique (11) en tension dans le bord plié de sorte que le cordon élastique (11) se trouve en contact avec l'adhésif du bord ; l'activation (108) de l'adhésif du bord plié pour coller le cordon élastique (11) en tension à l'adhésif à l'intérieur du bord plié et pour coller le bord plié à la feuille plastique (12), **caractérisé par** :
ladite application (102) de l'adhésif (12) est effectuée avant ledit pliage (104) du bord de la feuille plastique (12).

11. Procédé (100) selon la revendication 10, et comprenant en outre l'incrustation d'un autre cordon élastique continu (11) au niveau d'un bord opposé de la feuille plastique continue (12), comprenant :
l'application (102) de l'adhésif sur le bord opposé de la feuille plastique (12) ;
le pliage (104) d'un bord opposé de la feuille plastique (12) de sorte que l'adhésif se trouve à l'intérieur du bord plié opposé ;
l'alimentation (106) de l'autre cordon élastique (11) en tension dans le bord plié opposé de sorte que ledit autre cordon élastique (11) se trouve en contact avec l'adhésif du bord opposé ; et
l'activation (108) de l'adhésif du bord plié opposé pour coller l'autre cordon élastique (11) en tension à l'adhésif à l'intérieur du bord plié opposé et pour coller le bord plié opposé à la feuille plastique (12), **caractérisé par** :
ladite application (102) de l'adhésif sur le bord opposé est effectuée avant ledit pliage (104) du bord opposé de la feuille plastique (12).

12. Procédé selon la revendication 10 ou 11, et comprenant en outre la pulvérisation (11) de l'adhésif le long d'un ou des deux bords de la feuille plastique (12), ou l'application d'une perle ou d'une bande continue de l'adhésif le long d'un ou des deux bords de la feuille plastique (12).

13. Procédé selon l'une quelconque des revendications 10 à 12, dans lequel ledit pliage (104) de l'un ou des deux bords de la feuille plastique (12) comprend la mise en tension de la feuille plastique (12) entre deux emplacements et la déviation de la feuille de plastique à l'écart d'un plan (112) entre lesdits emplacements en utilisant un rouleau (20) afin de tourner un ou les deux bords de la feuille plastique (12) autour d'une extrémité respective du rouleau (20).

14. Procédé selon l'une quelconque des revendications 10 à 13, dans lequel ladite alimentation (106) comprend l'utilisation d'une roue de poulie respective (24) pour introduire un cordon élastique respectif (11) dans un bord plié associé.

15. Procédé selon l'une quelconque des revendications 10 à 14, et comprenant en outre l'utilisation d'un adhésif thermofusible.

16. Procédé selon la revendication 15, et comprenant en outre le chauffage de l'adhésif pour fournir ladite activation de celui-ci.

17. Procédé selon l'une quelconque des revendications 10 à 16, et comprenant en outre l'application d'une pression sur un ou les deux bords pliés.

18. Procédé selon l'une quelconque des revendications 10 à 17 et comprenant en outre la fabrication de produits de sac comprenant des couvre-chaussures, des filets à cheveux, des sacs poubelle, des housses de volant, des housses de siège, des housses de véhicule ou des housses d'alarme incendie, ou d'autres housses de protection utilisant l'une ou plusieurs feuilles de plastique.

19. Procédé selon la revendication 10, et comprenant en outre la fabrication de produits tubulaires comprenant des manchons ou autres housses utilisant l'une ou plusieurs feuilles plastique.
